# EUROPÄISCHE PATENTANMELDUNG

(11) **EP 2 154 447 A2**
(43) Veröffentlichungstag der Anmeldung: **17.02.2010**
(21) Anmeldenummer: 09167127.1
(22) Anmeldetag: 04.08.2009
(51) Int. Cl.: F24H 9/12

(54) **Zu- und Auslaufrohr für einen Durchlauferhitzer**

(30) Priorität: 14.08.2008 DE 102008037680
(71) Anmelder: BSH Bosch und Siemens Hausgeräte GmbH, 81739 München (DE)
(72) Erfinder: Bauer, Franz, 83374 Traunwalchen (DE); Englisch, Christian, 83324 Ruhpolding (DE); Gruber, Michael, 83362 Surberg (DE)

(57) **Zusammenfassung**

Die vorliegende Erfindung betrifft ein Zu- und/oder Auslaufrohr (1) für einen Durchlauferhitzer, wobei das Rohr (1) ein Metall umfasst.

Die Erfindung zeichnet sich dadurch aus, dass an das Rohr (1) ein Doppelbördel (2) angeformt ist, und das Rohr (1) mittels einer U-förmigen Drahtklammer (3) im Dichtsitz (4) des Heizblocks fixiert ist.

Die erfindungsgemäße Vorrichtung vereint in montagefreundlicher Weise Sicherheit und kostengünstige Produktion.

## Beschreibung

Die vorliegende Erfindung betrifft ein Zu- und/oder Auslaufrohr für einen Durchlauferhitzer, wobei das Rohr ein Metall umfasst.

Zu- und Auslaufrohre für Durchlauferhitzer sind im Stand der Technik bekannt. Bei den bekannten Lösungen wird ein zusätzliches Drehteil an das Rohr angelötet, das die Dichtfunktion sicherstellt. Zusätzlich werden häufig zur Sicherung der axialen Dichtstellen Überwurfmuttern angebracht. Diese bekannten Lösungen weisen den Nachteil auf, dass sie zusätzliche Montageschritte erforderlich machen, und somit unnötige Montagekosten verursachen.

Hiervon ausgehend ist es Aufgabe der vorliegenden Erfindung, ein Zu- und Auslaufrohr für einen Durchlauferhitzer zur Verfügung zu stellen, das sicher und dicht abschließt, und kostengünstig zu montieren ist. Gelöst wird diese Aufgabe mit den Merkmalen des Patentanspruches 1. Vorteilhafte Aus- und Weiterbildungen der Erfindung, welche einzeln oder in Kombination miteinander eingesetzt werden können, sind Gegenstand der Unteransprüche.

Das erfindungsgemäße Zu- und Auslaufrohr für einen Durchlauferhitzer baut auf gattungsgemäßen Zu- und Auslaufrohren dadurch auf, dass an das Rohr ein Doppelbördel angeformt ist, und das Rohr mittels einer U-förmigen Drahtklammer im Dichtsitz des Heizblocks fixiert ist. Dadurch wird eine gegenüber dem Stand der Technik deutlich verbesserte Montagefreundlichkeit erzielt. Zum einen wird durch den Doppelbördel ein separates Drehteil, das nachträglich angelötet werden müsste, eingespart und zum anderen kann durch den Doppelbördel und die Drahtklammer eine zuzverlässige Fixierung des Rohres in der Dichtstelle realisiert werden. Somit wird eine kostengünstige und zugleich sichere Verbindung zur Verfügung gestellt.

In einer bevorzugte Ausführungsform umfasst das Zu- und/oder Auslaufrohr Kupfer.

Als vorteilhaft hat es sich auch erwiesen, wenn eine zusätzliche Dichtfunktion durch einen O-Ring erreicht wird. Dadurch können Fertigungstoleranzen gut ausgeglichen werden.

Von Vorteil ist es auch, wenn das Zu- und/oder Auslaufrohr am Doppelbördel und am Rohrende im Heizblock geführt wird. Dies ermöglicht eine für den O-Ring erforderliche Dichtsitzgeometrie.

In einer weiteren bevorzugten Ausführungsform umfasst die U-förmige Drahtklammer einen Edelstahl-Federdraht.

In einer weitern bevorzugten Ausführungsform weist die U-förmige Drahtklammer eine Biegung auf, die ein Herausfallen verhindert. Dies ermöglicht einen vorteilhaften sicheren Sitz der Klammer.

Dabei ist es besonders vorteilhaft, wenn die Enden der U-förmigen Drahtklammer so geformt sind, dass sie leicht von Hand in dafür vorgesehenen Schlitze einschiebbar sind.

Die Erfindung lässt sich zutreffend wie folgt beschreiben:

Um axiale Dichte bzw. Überwurfmuttern zu vermeiden, soll eine radiale Dichtfunktion von Rohr und Heizblock kostengünstig realisiert werden. Ausgehend von dem Stand der Technik oder die Geometrie des Zu- und/oder Auslaufrohrs dahingehend modifiziert, dass an das Rohr ein Doppelbördel angeformt wird. Bei der bis dahin bekannten Lösung wird ein zusätzliches Drehteil an das Rohr angelötet, das die Dichtfunktion sicherstellt. Bei der hier vorliegenden Erfindung handelt es sich um ein Rohr, welches in einer bevorzugten Ausführungsform Metall umfassen kann und in einer weiteren bevorzugten Ausführungsform Kupfer umfassen kann, wobei das Rohr mit einem Doppelbördel versehen ist und mittels U-förmiger Drahtklammer im Dichtsitz des Halsblocks fixiert wird. Die Fertigungstoleranzen können mittels eines geeigneten O-Rings ausgeglichen werden. Die Vorteile der Erfindung bestehen darin, dass zum einen durch den Doppelbördel ein separates Drehteil, das nachträglich angelötet werden müsste eingespart wird und zum anderen kann durch den Doppelbördel und die Drahtklammer die Fixierung des Rohres in der Dichtstelle realisiert werden. Die für den O-Ring erforderliche Dichtsitzgeometrie wird sichergestellt, indem das Rohr am Doppelbördel und an dem Rohrende im Heizblock geführt wird. Die U-förmig gebogene Drahtklammer weist eine Biegekontur auf, die ein Herausfallen und dadurch bedingte Undichtigkeit verhindert. Dabei sollten die Drahtenden so geformt sein, dass sie sich leicht von Hand in die dafür vorgesehenen Schlitze einschieben lassen; Grate sind dabei zu vermeiden.

Die erfindungsgemäße Vorrichtung vereint in montagefreundlicher Weise Sicherheit und kostengünstige Produktion.

Weitere Vorteile und Ausgestaltungen der Erfindung werden im Folgenden anhand verschiedener Ausführungsbeispiele, auf welche die vorliegende Erfindung jedoch nicht beschränkt ist, sowie unter Bezugnahme auf die beiliegenden Zeichnungen erläutert. Bei der nachfolgenden Beschreibung der bevorzugten Ausführungsformen der vorliegenden Erfindung bezeichnen gleiche Bezugszeichen gleiche oder vergleichbare Komponenten.

Darin zeigen schematisch:
- Fig. 1: eine Querschnittszeichnung einer bevorzugten Ausführungsform eines Rohres für einen Durchlauferhitzer; sowie
- Fig. 2: eine Detailzeichnung einer bevorzugten Ausführungsform eines Rohres für einen Durchlauferhitzer.

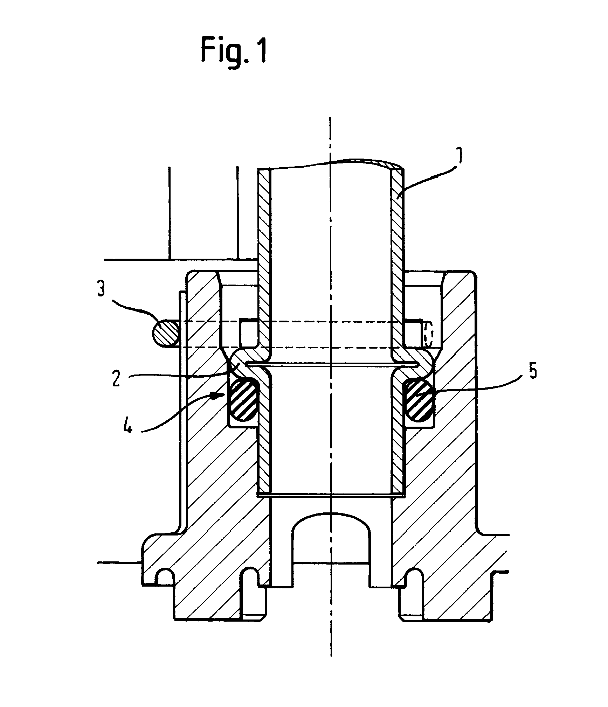

Fig. 1 zeigt in einer Querschnittsdarstellung ein Rohr 1 für einen Durchlauferhitzer. Dieses Rohr umfasst ein Metall. An das Rohr 1 ist ein Doppelbördel 2 angeformt. Darüber hinaus wird das Rohr 1 mittels einer U-förmigen Drahtklammer 3 im Dichtsitz 4 des Heizblocks fixiert. Dadurch wird eine sichere und kostengünstige Befestigung erreicht. Fertigungstoleranzen werden mittels eines geeigneten O-Rings 5 ausgeglichen. Durch diese Kombination von Doppelbördel 2, U-förmiger Drahtklammer 3 sowie O-Ring 5 wird ein besonders sicherer dauerhafter Halt bei verringerten Montagekosten erreicht.

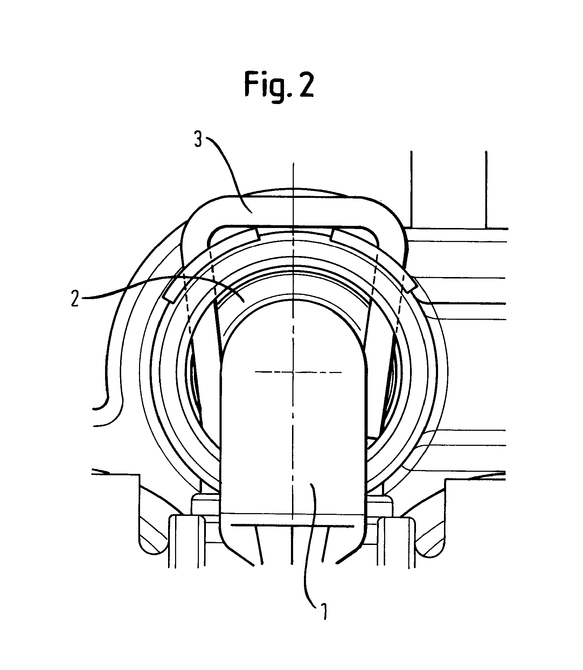

Fig. 2 zeigt eine Detailzeichnung eines Rohres 1 für einen Durchlauferhitzer. An das Rohr 1 ist ein Doppelbördel 2 angeformt. Mittels einer U-förmigen Drahtklammer 3 wird der Doppelbördel im Dichtsitz des Heizblockes fixiert.

Die erfindungsgemäße Vorrichtung vereint in montagefreundlicher Weise Sicherheit und kostengünstige Produktion.

### BEZUGSZEICHENLISTE:

- 1: Zulaufrohr, Auslaufrohr
- 2: Doppelbördel
- 3: U-förmige Drahtklammer
- 4: Dichtsitz
- 5: O-Ring

## Patentansprüche

1. Zu- und/oder Auslaufrohr (1) für einen Durchlauferhitzer, wobei das Rohr (1) ein Metall umfasst, **dadurch gekennzeichnet, dass** an das Rohr (1) ein Doppelbördel (2) angeformt ist, und das Rohr (1) mittels einer U-förmigen Drahtklammer (3) im Dichtsitz des Heizblocks fixiert ist.

2. Zu- und/oder Auslaufrohr (1) nach Anspruch 1, **dadurch gekennzeichnet, dass** das Rohr Kupfer umfasst.

3. Zu- und/oder Auslaufrohr (1) nach Anspruch 1 oder 2, **dadurch gekennzeichnet, dass** eine zusätzliche Dichtfunktion durch einen O-Ring (5) erreicht wird.

4. Zu- und/oder Auslaufrohr (1) nach Anspruch 3, **dadurch gekennzeichnet, dass** das Rohr (1) am Doppelbördel (2) und am Rohrende im Heizblock geführt wird.

5. Zu- und/oder Auslaufrohr (1) nach einem der vorhergehenden Ansprüche, **dadurch gekennzeichnet, dass** die U-förmige Drahtklammer (3) einen Edelstahl-Federdraht umfasst.

6. Zu- und/oder Auslaufrohr (1) nach einem der vorhergehenden Ansprüche, **dadurch gekennzeichnet, dass** die U-förmige Drahtklammer (3) eine Biegung aufweist, die ein Herausfallen verhindert.

7. Zu- und/oder Auslaufrohr (1) nach einem der vorhergehenden Ansprüche, **dadurch gekennzeichnet, dass** die Enden der U-förmigen Drahtklammer (3) so geformt sind, dass sie leicht von Hand in dafür vorgesehenen Schlitze einschiebbar sind.
